# EUROPÄISCHE PATENTSCHRIFT

(11) **EP 0 993 637 B1**
(45) Veröffentlichungstag und Bekanntmachung des Hinweises auf die Patenterteilung: **22.12.2004**
(21) Anmeldenummer: 98946203.1
(22) Anmeldetag: 09.10.1998
(51) Int. Cl.: G06F 13/42

(54) **SERIELLER DATEN- UND STEUER-BUS MIT VERSORGUNGSSPANNUNG**
SERIAL DATA- AND CONTROL-BUS SUPPLYING VOLTAGE
BUS DE DONNEES SERIE ET DE COMMANDE A TENSION D'ALIMENTATION

(30) Priorität: 19.11.1997 CH 267197
(43) Veröffentlichungstag der Anmeldung: 19.04.2000
(73) Patentinhaber: Menico AG, 8610 Uster (CH)
(72) Erfinder: MELCHER, Domenic, CH-8610 Uster (CH)
(74) Vertreter: Salgo, Reinhold Caspar, Dr.
(86) Internationale Anmeldenummer: PCT/CH1998/000433
(87) Internationale Veröffentlichungsnummer: WO 1999/027461

(56) Entgegenhaltungen:
- US-A- 4 357 605
- US-A- 4 583 091
- US-A- 4 770 842

## Beschreibung

Die vorliegende Erfindung bezieht sich auf ein Bus-System zur Uebertragung von digitalen Messdaten oder Steuerbefehlen nach dem Oberbegriff des Patentanspruches 1. Solche Bus-Systeme sind mehrere bekannt und unterscheiden sich voneinander durch die Art der Datenübertragung, der Adressierung, der Anzahl der Leitungen und der Energie-Uebertragung.

Eine grosse Hauptgruppe von Bus-Systemen betrifft die parallele Uebertragung von Daten. Sie wird hier nicht weiter berücksichtigt, da sie hinsichtlich der vorliegenden Erfindung nicht relevant ist. Die zweite grosse Hauptgruppe arbeitet mit serieller Uebertragung der Daten und liefert den Stand der Technik.

Im engeren Sinne wird der Stand der Technik gebildet durch Systeme, bei denen eine Vielzahl von Teilnehmern aktiver oder/und passiver Natur (sog. Bus-Transceiver, BT) an den eigentlichen Daten-Bus angeschlossen sind.

Solche Bus-Systeme sind bekannt beispielsweise aus EP 0 146 045 A2 (fortan D1), US 4, 497, 391 (D2), EP 0 540 449 A1 (D3) und EP 0 728 621 A2 (D4).

D1 beschreibt ein Trägerfrequenzsystem, bei dem als Datenbus eine gewöhnliche elektronische Versorgungsleitung verwendet wird, In D2 ist eine Fahrstuhlsteuerung beschrieben, die über zwei Vierdrahtsysteme einerseits die ortsfesten Wählstationen, anderseits die im Fahrstuhl befindliche Wählstation - im Sinne der hier gewählten Definitionen alles Bus-Transceiver (BT)- mit der eigentlichen Fahrstuhl-Steuerung oder Hauptstation verbindet. Die Adressierung erfolgt mittels eines Zeitschlitz-Systems, wo jedem BT zweimal in jedem Adresszyklus eine bestimmte zeitlich definierte Adresse zugewiesen ist, das erste Mal zur Uebermittlung von Signalen von BT an die Hauptstation, das zweite Mal für den umgekehrten Weg.

Aus D3 ist ein schnelles Datenverbindungssystem im wesentlichen für den Einsatz in und bei Rechneranlagen bekannt, das besonders auf hohe Transmissionsraten optimiert ist. Die Daten-Transmission jedes BT erfolgt zeitlich getrennt nach Empfang und Senden; ebenso sind für den Datenbus eine Vielzahl von Leitungen vorgesehen, die jeweils paarweise für die Bildung eines Differential-Signals herangezogen werden.

Ferner ist aus D4 ein besonders für den Einsatz in Motorfahrzeugen entwickeltes Bus-System bekannt, dessen Daten-Uebermittlung auf einer Pulshöhenselektion beruht, wobei die übermittelten Informationen mit Pulsbreitenmodulation codiert sind und ein höheres Spannungsniveau aufweisen als die Versorgungsspannung des eindrahtigen Bus-Systems. Die 0-Referenzspannung ist im wesentlichen das Potential des FahrzeugChassis als Rückleiter zur Batterie. Ein weiteres erfindungsgemässes Merkmal ist die trapezoidartige Strompuls-Form zur Reduktion unstetiger Uebergänge. Jedes der vier hier beispielsweise angeführten Systeme hat seine eigene Charakteristik und ist für besondere Anwendungen ausgelegt. Die Verwendung des einen Systems im typischen Anwendungsbereich eines anderen stösst in der Regel auf grosse Schwierigkeiten. Ferner sind in allen zitierten Dokumenten Systeme vorgestellt, die - einschliesslich der Stromversorgung - mindestens drei Leiter benötigen und in aller Regel durch Fachleute installierte BT aufweisen (was auch so Installationsfehler nicht ausschliesst; siehe D2).

Die Aufgabe, die durch die vorliegende Erfindung gelöst werden soll, ist die Schaffung eines Bus-Systems zur seriellen Uebertragung digitaler Daten mit einer Vielzahl von einzeln adressierbaren BT, die durch einen lediglich zweidrahtigen allgemeinen Bus verbunden sind, der auch die Energieversorgung der BT sowie der mit diesen jeweils verbundenen Verbrauchern sicherstellen kann, mit welchem es einerseits möglich ist, digitale Daten von genau einem sendenden BT gleichzeitig an genau einen, an zwei oder mehrere empfangende BT zu übermitteln, und mit welchem es andererseits möglich ist, das Resultat einer logischen Elementarverknüpfung, also die jeweilige logische Summe. (ODER-Verknüpfung) oder das jeweilige logische Produkt (UND-Verknüpfung), der digitalen Daten von zwei oder mehreren gleichzeitig sendenden BT gleichzeitig an genau einen, zwei oder ebenfalls mehrere empfangende BT zu übermitteln, wobei dieses Bus-System ohne Anwendung von Software in Betrieb gesetzt und betrieben werden kann und zusätzlich so ausgelegt werden kann, dass Verpolungsfehler ausgeschlossen sind.

Die Lösung der gestellten Aufgabe ist wiedergegeben im kennzeichnenden Teil des Patentanspruches 1 hinsichtlich der wesentlichen Merkmale, in den Patentansprüchen 2 bis 20 hinsichtlich besonderer Merkmale und vorteilhafter Ausbildungen.

Es zeigen:
- Fig: 1: eine Prinzip-Darstellung des erfindungsgemässen Bus-Systems,
- Fig. 2: eine erfindungsgemässe räumliche Gruppierung der BT,
- Fig. 3: das Prinzip-Schaltbild eines Master-BT 1,
- Fig. 4: das Prinzip-Schaltbild eines Slave-BT 5,
- Fig. 5: das Prinzip-Schaltbild einer Variante des Slave-BT 5 mit Verpolungsschutz,
- Fig. 6: den zeitlichen Spannungsverlauf zwischen den zwei Leitern 2, 3 des Bus 4 während der Uebermittlung eines gewöhnlichen Daten-Bits,
- Fig. 7: den zeitlichen Spannungsverlauf zwischen den zwei Leitern 2, 3 des Bus 4 während der Uebermittlung des letzten Datenbits eines Zyklus mit einem Synchronisierungs-Signal S,
- Fig. 8: das Blockschaltbild einer Ausführungsform des erfindungsgemässen BT mit einem I/O-Port,
- Fig. 9: das Detailschaltbild eines BT in der Funktion als Master-BT 1,
- Fig. 10: das Detailschaltbild eines BT in der Funktion als Slave-BT 5.

Da jedem Fachmann verschiedene Ausführungsformen der hier eingesetzten Funktionsgruppen bekannt und geläufig sind, werden diese im Folgenden nur im Einzelfall auf der Ebene von elementaren Grundschaltelementen detailliert spezifiziert.

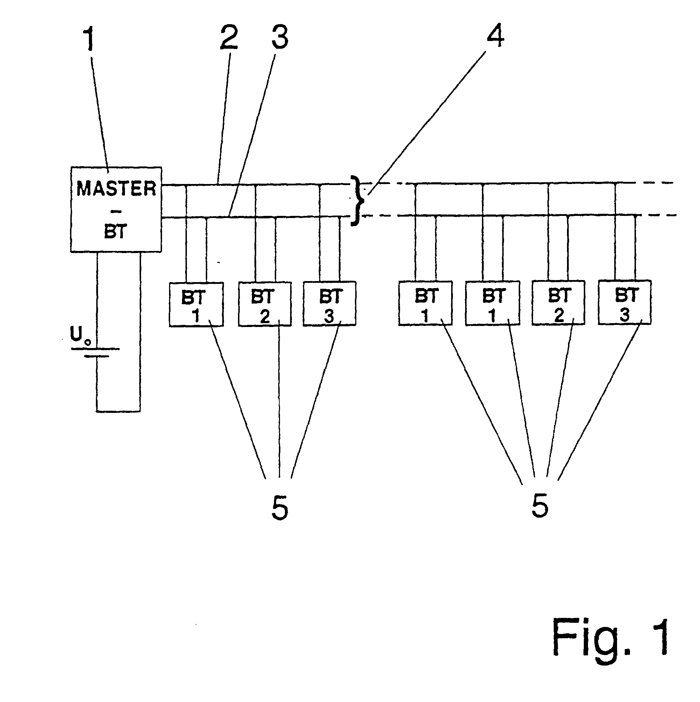

In Fig. 1 ist eine Prinzip-Darstellung des erfindungsgemässen Bus-Systems wiedergegeben. Ein Master-BT 1 ist an eine Gleichspannungsquelle 9 mit Spannung Uo angeschlossen und liefert sowohl elektrische Energie als auch Takt-Informationen an einen aus zwei Leitern 2, 3 bestehenden Bus 4, an welchem weiter eine Vielzahl von Slave-BT 5 parallel angeschlossen sind. Die beiden Leiter 2, 3 können aus zwei einzelnen Drähten, aber auch aus einem Draht und dem Metallchassis eines Fahrzeugs bestehen. Jeder BT hat seine Adresse in codierter Form eingeprägt. Jeweils mindestens zwei BT haben dieselbe Adresse.

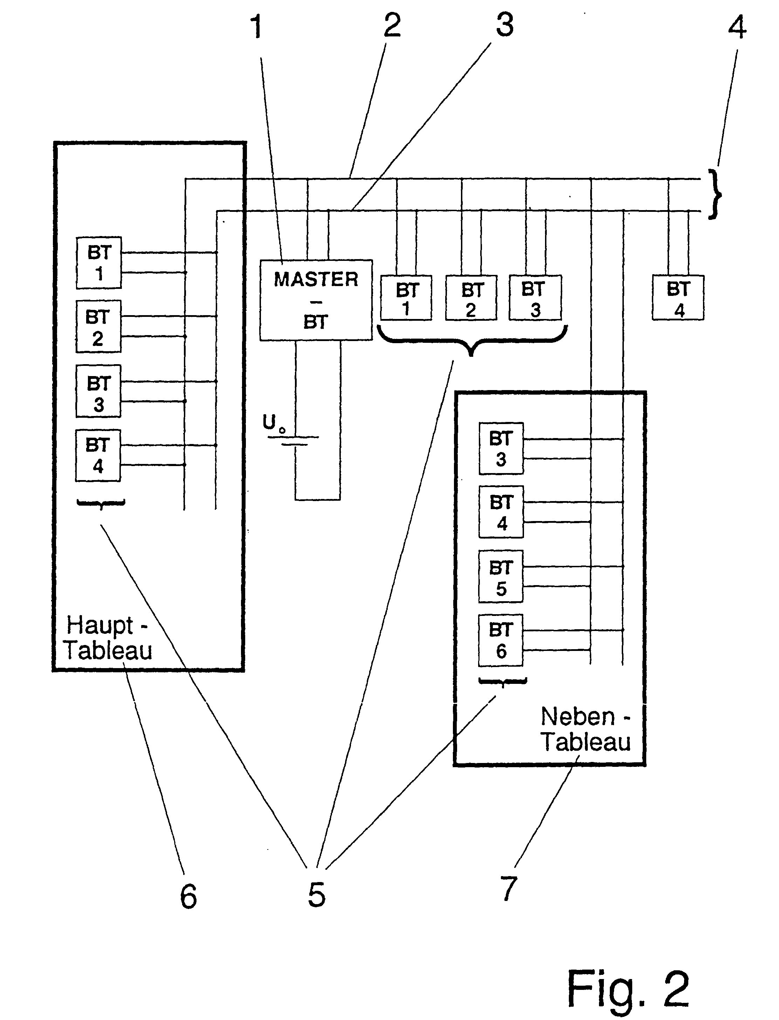

Fig. 2 zeigt schematisch eine erfindungsgemässe räumliche Gruppierung der BT. Vorgesehen ist beispielsweise ein Haupttableau 6 und ein Nebentableau 7. Die auf einem Tableau 6, 7 angeordneten oder sonst für den Benützer zugänglichen BT sind in der Regel mit Eingabegeräten wie Tasten oder Schalter, oder aber mit Monitoren zur Anzeige von Messwerten oder Zuständen etc. verbunden. Andere BT, die in der Regel für den Benützer nicht unmittelbar zugänglich sind, sind mit Aktuatoren, Schaltern, Sensoren oder dergleichen verbunden.

Die BT führen Kontroll-, Mess- und Steuerfunktionen aus: Sie übermitteln digital codierte Informationen wie EIN/AUS-Zustände, Messwerte oder Steuerbefehle. Jedem der nicht unmittelbar zugänglichen BT ist in der Regel ein BT auf dem Haupttableau 6 und, beispielsweise einer Auswahl davon, ein BT auf dem Nebentableau 7 zugeordnet. Zugeordnet bedeutet, dass diesen BT die gleiche Adresse eingeprägt ist. Jeder BT kann nach Bedarf entweder als Sender oder als Empfänger konfiguriert werden, wie dies später dargelegt wird.

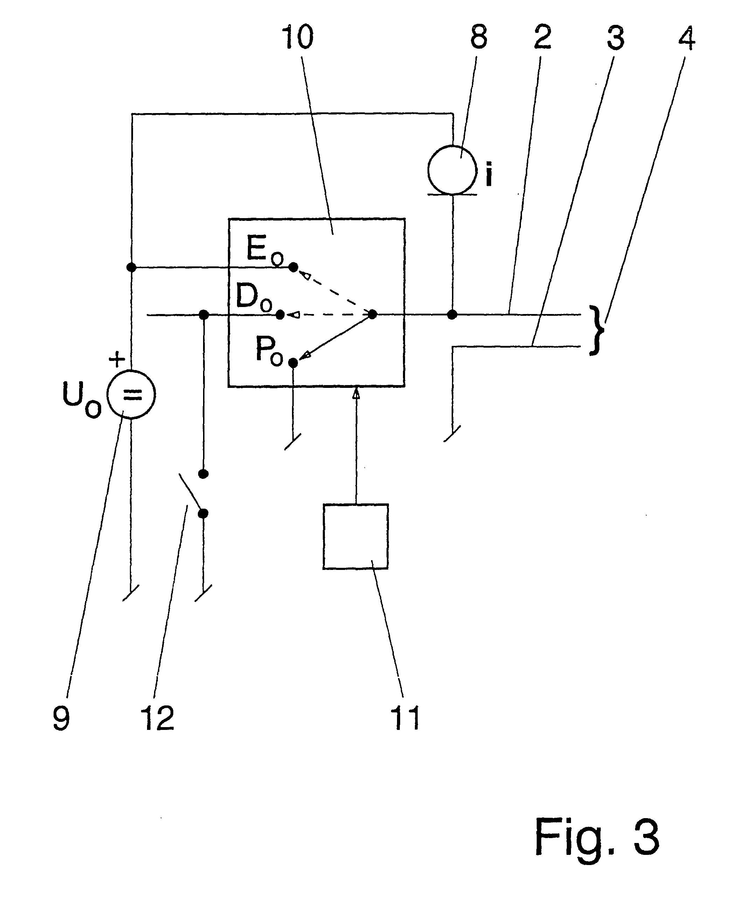

Fig. 3 zeigt ein Prinzip-Schaltbild eines Master-BT 1. Am Leiter 2 der beiden Leiter 2, 3 des Bus 4 liegt eine Gleichstromquelle 8, die ihrerseits an der Gleichspannungsquelle 9 mit Spannung Uo liegt, während der zweite Leiter 3 auf dem Potential Null liegt. Ein mit elektronischen Mitteln realisierter Schalter 10 verbindet, unter dem Einfluss der Zeitsteuerung 11, auf welche später eingegangen wird, für jedes einzelne zu übermittelnde Datenbit hintereinander Anschlüsse Po, Do und Eo mit dem Leiter 2. Der Anschluss Po liegt ständig auf dem Potential Null. Solange Leiter 2 mit dem Anschluss Po verbunden ist, werden die beiden Leiter 2, 3 also im wesentlichen kurzgeschlossen, wodurch ein Pausen-Signal P mit Wert 0 am Bus 4 anliegt. Ein weiterer, ebenfalls mit elektronischen Mitteln realisierter Schalter 12 bestimmt, auf welchem Potential der Anschluss Do liegt. Soll vom als Sender konfigurierten Master-BT 1 zu einem vorgesehenen Zeitpunkt ein Datenbit mit Wert 0 gesendet werden, wird der Schalter 12 geschlossen, und der Anschluss Do liegt auf dem Potential Null, wodurch die beiden Leiter 2, 3 des Bus 4 kurzgeschlossen werden. Ist der Master-BT 1 hingegen für das aktuelle Bit als Empfänger konfiguriert, bleibt der Schalter 12 geöffnet, und der Master-BT 1 übernimmt den zu diesem Zeitpunkt am Bus 4 anliegenden Wert des Bits. Während der Dauer eines auf das Pausen-Signal P folgenden Daten-Signals D werden die beiden Leiter 2, 3 also ebenfalls kurzgeschlossen, sofern vom Master-BT 1 ein Datenbit mit Wert 0 gesendet wird. Die Gleichstromquelle 8, die zur hohen Störsicherheit einen relativ hohen Strom i in der Grössenordnung von beispielsweise 100 mA liefert, bestimmt während der Schalterstellung Do das Ruhepotential am Leiter 2. Wenn ein Datenbit mit Wert 1 übertragen werden soll, wird der Leiter 2 nicht kurzgeschlossen. Die Gleichstromquelle 8 zieht die Leitung 2, nachdem allfällige Ladungskapazitäten umgeladen worden sind, auf das Potential der Gleichspannungsquelle 9. Anschliessend an das Daten-Signal D wird der Leiter 2 mit dem Anschluss Eo verbunden, der mit dem positiven Pol der Gleichspannungsquelle 9 verbunden ist. Am Leiter 2 liegt die Spannung Uo an, was einem am Bus 4 anliegenden Energie-Signal E, resp. einem Synchronisierungs-Signal S, entspricht, worauf später eingegangen wird. Selbstverständlich muss die Leitfähigkeit der Leiter 2, 3 der gewählten respektive für die jeweilige Anwendung benötigten Stromstärke angepasst werden.

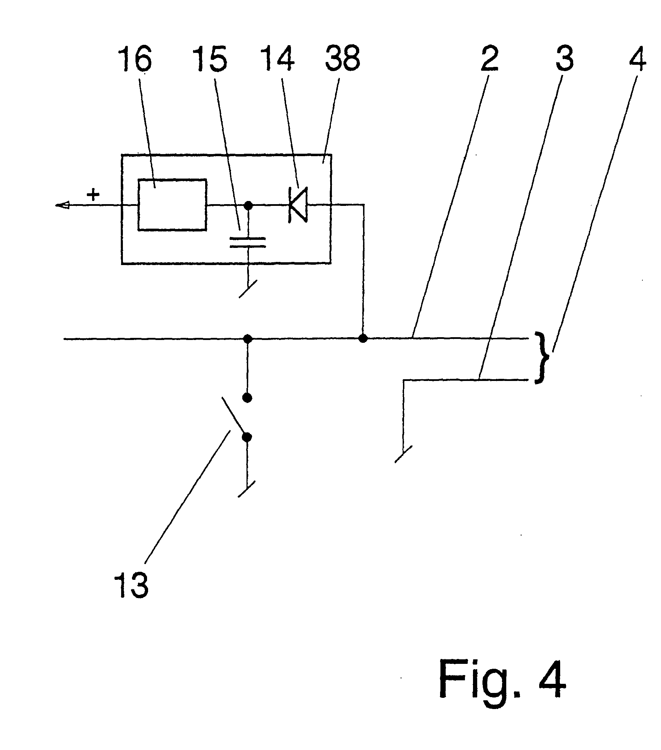

Fig. 4 zeigt das Prinzip-Schaltbild eines Slave-BT 5. Statt des Schalters 12 wie beim Master-BT 1 ist hier ein entsprechender, ebenfalls elektronisch realisierter Schalter 13 vorhanden. Soll vom als Sender konfigurierten Slave-BT 5 zu einem vorgesehenen Zeitpunkt ein Datenbit mit Wert 0 gesendet werden, wird der Schalter 13 geschlossen, wodurch die beiden Leiter 2, 3 des Bus 4 kurzgeschlossen werden. Ist der Slave-BT 5 hingegen als Empfänger konfiguriert, bleibt dieser Schalter 13 permanent geöffnet, und der Slave-BT 5 übernimmt den zu diesem Zeitpunkt am Bus 4 anliegenden Wert des Bits. Falls der Wert des anliegenden Bits gleich 1 ist, wird der Strom i der Gleichstromquelle 8 in die nachfolgend beschriebenen Energiespeicherelemente 38 geleitet. Der Slave-BT 5 enthält ein solches Energiespeicherelement 38, welches dadurch realisiert ist, dass Leiter 2 des Bus 4 mit einer in Durchlassrichtung geschalteten Diode 14 verbunden ist, deren Ausgang an einem Speicher-Kondensator 15 liegt. Liegt ein Energie-Signal E oder ein Synchronisierungs-Signal S am Leiter 2, wird der Speicher-Kondensator 15 aufgeladen. Ein ebenfalls an diesem Speicher-Kondensator 15 liegender Stabilisator 16 liefert an seinem Ausgang eine stabilisierte Spannung von beispielsweise 5 V, die zur Speisung dieses Slave-BT 5 sowie zur Versorgung des mit diesem Slave-BT 5 verbundenen Verbrauchers verwendet wird. Selbstverständlich wäre auch eine direkte Energie-Versorgung des Slave-BT 5 möglich. Dazu müsste aber eine zusätzliche zweidrahtige Leitung von einer elektrischen Energiequelle zu diesem Slave-BT 5 gelegt werden. Ein wesentlicher Vorteil der Erfindung, dass nämlich die Energie für jeden BT und jeden mit diesem verbundenen Verbraucher ebenfalls über den Bus 4 geliefert wird, würde dadurch nicht genutzt. Schliesst nun zu einem gewissen Zeitpunkt auch nur einer von verschiedenen einander zugeordneten BT seinen Schalter 13, respektive den Schalter 12 im Fall des Master-BT 1, ist der Bus 4 kurzgeschlossen, was in positiver Logik einem logischen Produkt, also einer verdrahteten logischen UND-Verknüpfung ("wired AND"), entspricht: Alle Schalter 13, respektive 12, aller angeschlossener BT mit gleicher Adresse müssen offen sein, damit am Bus 4 eine positive Spannung, also eine logische 1, erscheint. Ist umgekehrt auch nur bei einem einzigen BT mit der gleichen Adresse dieser Schalter 13, respektive 12, geschlossen, wird der Bus 4 kurzgeschlossen, was in negativer Logik einer logischen Summe, also einer verdrahteten logischen ODER-Verknüpfung ("wired OR") entspricht, womit am Bus keine Spannung, also eine logische 0, anliegt. Diese beiden logischen Elementarverknüpfungen ermöglichen es beispielsweise, von verschiedenen Bedienungsgeräten aus auf denselben Empfänger, beispielsweise auf ein Relais, einzuwirken.

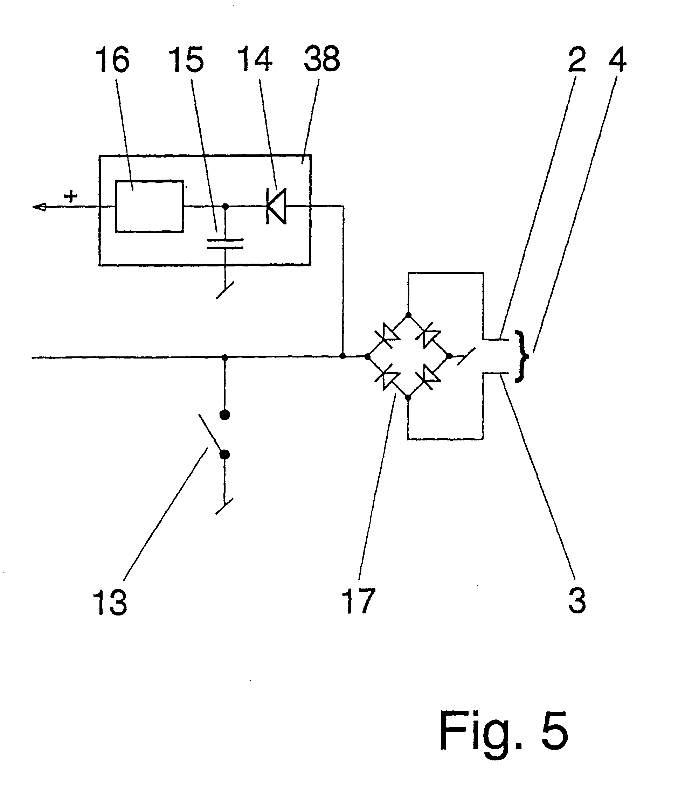

In Fig. 5 ist das Prinzip-Schaltbild einer Variante eines Slave-BT 5 mit Verpolungsschutz wiedergegeben. Diese Variante unterscheidet sich von der in Fig. 4 wiedergegebenen Ausführung einzig darin, dass die Leiter 2, 3 des Bus 4 nicht direkt, sondern über einen Vollweggleichrichter 17 mit dem Slave-BT 5 verbunden sind. Dadurch wird sichergestellt, dass bei der Installation des erfindungsgemässen Bus-Systems keine Verpolungsfehler auftreten können, was die Installation entsprechend erleichtert.

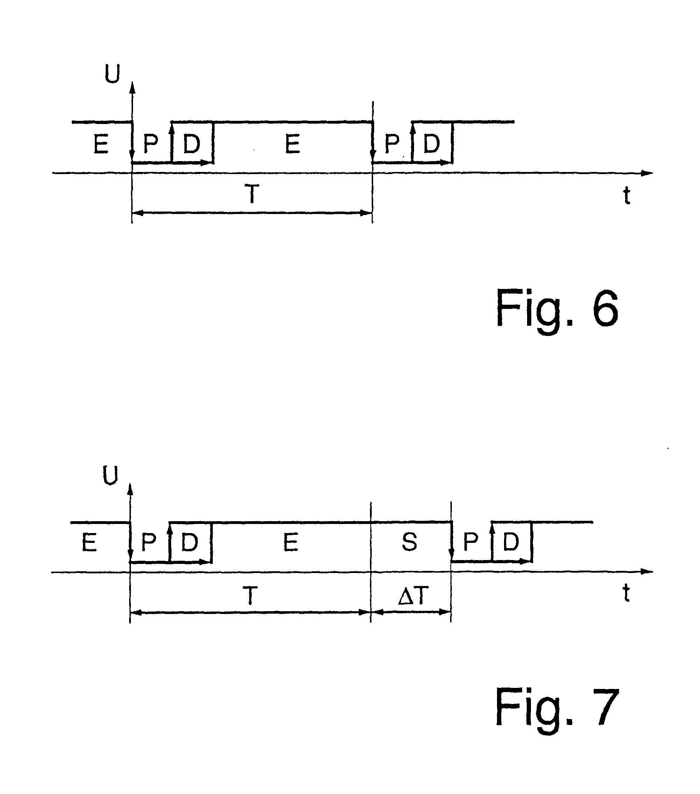

Die Fig. 6 zeigt den idealisierten zeitlichen Spannungsverlauf zwischen den zwei Leitern 2, 3 des Bus 4 während der Uebermittlung eines gewöhnlichen Daten-Bits. Nach dem Setzen eines ersten Synchronisierungs-Signals S durch den Master-BT 1 - worauf später eingegangen wird - legt dieser, gesteuert von seiner Zeitsteuerung 11, auf welche ebenfalls später eingegangen wird, zyklisch wiederkehrend eine Folge von identischen Bits, wobei jedes dieser Bits eine Bit-Intervallzeit T beansprucht. Diese Bit-Intervallzeit T kann innerhalb der technischen Grenzen im Prinzip beliebig vorgewählt werden. Ihr Kehrwert 1/T ist obere Grenze der mit dem Bus-System möglichen Uebertragungsrate. Die Anzahl der Bits innerhalb eines Zyklus ist im Prinzip beliebig, beträgt jedoch vorzugsweise eine Potenz von 2, also 2ⁿ, hier beispielsweise 2¹⁰ = 1024. Nach dem Abschluss dieser 1024 aufeinanderfolgenden Bits, oder, in Varianten, einem ganzen Vielfachen davon, beginnt mit einem neuen Synchronisierungs-Signal S ein neuer Zyklus. In dieser Ausführungsform dauert das zu Beginn eines Bits erscheinende Pausen-Signal P, wie auch das darauf unmittelbar folgende Daten-Signal D, je einen Sechstel der Bit-Intervallzeit T. Das an das Daten-Signäl D anschliessende Energie-Signal E dauert die restlichen zwei Drittel der Bit-Intervallzeit T. Selbstverständlich sind aber andere Aufteilungen der Bit-Intervallzeit T auf die drei verschiedenen Signale P, D und E eines Bits ebenfalls erfindungsgemäss.

Die Fig. 7 zeigt den idealisierten zeitlichen Spannungsverlauf zwischen den zwei Leitern 2, 3 des Bus 4 während der Uebermittlung des letzten Bits eines Zyklus mit einem Synchronisierungs-Signal S. Statt des nach der Uebermittlung eines gewöhnlichen Daten-Bits normalerweise eintreffenden Pausen-Signals P als Beginn des darauffolgenden Bits folgt ein Synchronisierungs-Signal S, welches den Beginn des folgenden Zyklus markiert. Die Dauer ΔT des Synchronisierungs-Signals S beträgt in dieser Ausführungsform einen Drittel der Bits-Intervallzeit T. Auch hier ist eine andere Dauer dieses Signals selbstverständlich ebenfalls erfindungsgemäss. Gefolgt wird das Synchronisierungs-Signal S wieder von einem ersten Pausen-Signal P des ersten Bits im neuen Zyklus, respektive, in den angesprochenen Varianten, von einem ersten Pausen-Signal P im ersten Zyklus einer ganzen Anzahl von folgenden Zyklen. Jedes Bit weist je genau eine abfallende und eine ansteigende Flanke auf. Die abfallende Flanke, welche zu Beginn jedes Pausen-Signals P auftritt, definiert dabei den Anfang eines neuen Bits.

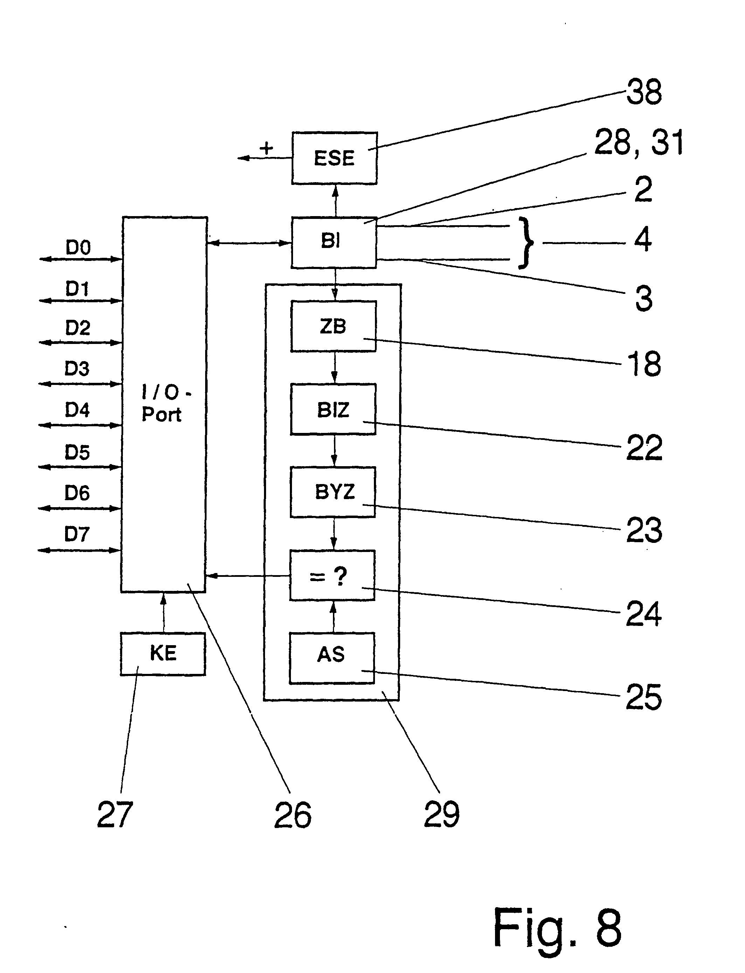

Fig. 8 zeigt das Blockschaltbild einer Ausführungsform eines BT, welches für alle BT, also sowohl für den Master-BT 1 wie auch für die übrigen Slave-BT 5, im wesentlichen gleich ist. Das Energiespeicherelement 38 und seine Funktionen wurden bereits unter Fig. 4 und 5 beschrieben, weshalb hier nicht mehr darauf eingegangen wird.

Jeder BT enthält einen I/O-Port 26, ein Bus-Interface 28 respektive ein Master-Bus-Interface 31, eine Zeitsteuerungsund Synchronisations-Schaltung 29 und ein I/O-Konfigurationselement 27, welche alle untereinander und mit dem Bus 4 in geeigneter Weise verbunden sind. Der I/O-Port 26 weist eine Anzahl paralleler Ein-/Ausgänge auf. Die Anzahl dieser Ein-/Ausgänge ist im Prinzip beliebig vorgebbar, wird aber aus praktischen Gründen meist ebenfalls eine Zweierpotenz sein, beispielsweise 2³. Sollen solche Bytes zu je 8 Bits übertragen werden, wie dies nicht unüblich und hier beispielsweise vorgesehen ist, sind dazu 8 der 1024 Bits eines ganzen Zyklus nötig, wodurch sich eine maximal mögliche Anzahl von 1024/8 = 128 verschiedene Adressen der BT ergibt. Durch die Einstellung des I/O-Konfigurationselements 27 können die 8 Bits beliebig bitweise als Sende- oder Empfangsbit konfiguriert und auch beliebig aufgeteilt werden, beispielsweise in 1 x 2 Bits und 1 x 6 Bits, oder auch, ebenfalls beispielsweise, in 2 x 4 Bits, so dass innerhalb einer Byte-Länge die Uebertragung zweier 4-Bit-Informationen möglich ist. Der I/O-Port 26 enthält weiter auch die für die Speicherung dieser 8 Bits nötigen Speicherelemente, sowie, in einer Variante, Vergleichselemente zum Vergleich von einander entsprechenden Werten D0 - D7 aus zwei unmittelbar aufeinander folgenden Zyklen. Diese Speicher- und, Vergleichselemente wurden nicht separat eingezeichnet, da diese bekanntem Stand der Technik entsprechen. In dieser Variante kann der I/O-Port 26 über das I/O-Konfigurationselement 27, zur fehlersicheren Uebertragung, für eine doppelte Uebertragung konfiguriert werden: Eine Aenderung der Werte D0 bis D7 wird dann erst nach zwei Zyklen mit untereinander je übereinstimmenden Werten am I/O-Port 26 ausgegeben.

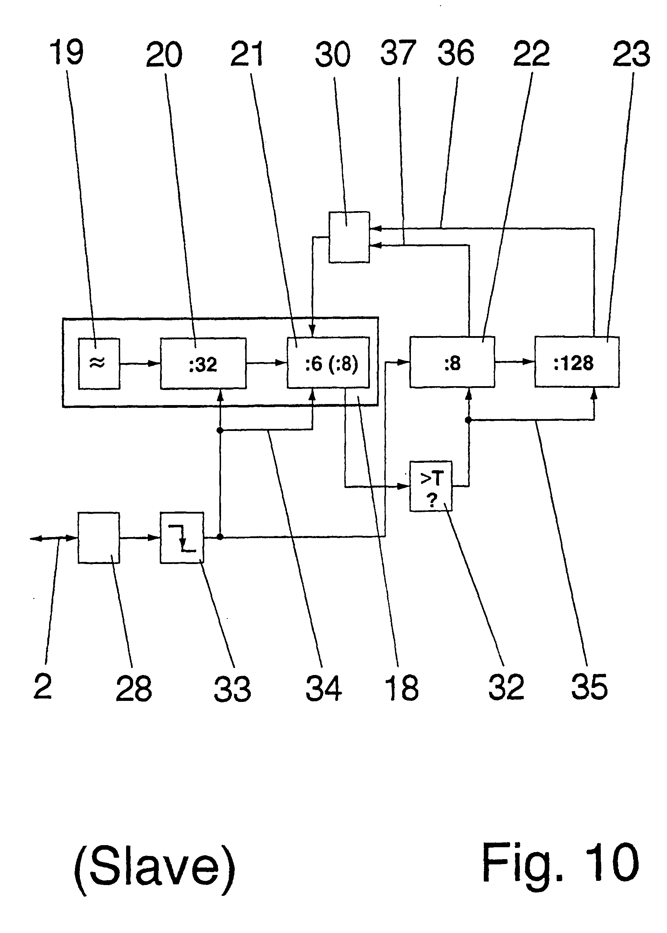

Der I/O-Port 26 ist über das Bus-Interface 28, respektive über das Master-Bus-Interface 31, mit dem Bus 4 verbunden. Die Zeitsteuerungs- und Synchronisations-Schaltung 29 enthält eine Zeitbasis 18, einen Bit-Zähler 22, einen Byte-Zähler 23, einen Adress-Speicher 25 und einen Komparator 24, welche ebenfalls alle untereinander und mit dem Bus 4 in geeigneter Weise verbunden sind. Insbesondere ist die Zeitbasis 18 über das Bus-Interface 28 mit dem Bus 4 verbunden. Von jedem Slave-BT 5 wird das zu Beginn eines Zyklus am Bus 4 anliegende Synchronisations-Signal S erfasst und die nötigen Signale Reset 34 respektive Master-Reset 35 erzeugt, mit welchen die mit ihm verbundene Zeitbasis 18, aber auch die mit ihm ebenfalls verbundenen Zähler, der Bit-Zähler 22 und der Byte-Zähler 23, auf Null zurückgesetzt werden, worauf bei der Beschreibung von Fig. 10 weiter eingegangen wird. Sowohl der Byte-Zähler 23 als auch der Adressspeicher 25 sind mit dem Komparator 24 verbunden. Dieser vergleicht die frei vorgewählte Adresse im Adressspeicher 25 mit dem Inhalt des Byte-Zählers 23. Stimmen diese Inhalte überein, werden im folgenden Zeitschlitz, dessen Dauer acht Bit-Intervallzeiten T entspricht, unter allen BT mit dieser speziellen Adresse die nächsten 8 am Bus 4 anliegenden Bits übermittelt. Ob diese 8 Bits gesendet oder empfangen werden, ist durch die ebenfalls vorgewählte Einstellung des jeweiligen I/O-Konfigurationselements 27 gegeben. Der Adress-Speicher 25 und das I/O-Konfigurationselement 27 können technisch beispielsweise mit DIP-8-Schaltern, also durch die Schalterstellung von verschiedenen statischen Kurzschluss-Steckern, realisiert sein, wovon mindestens einer massgeblich ist für die Konfiguration des BT als Sender oder als Empfänger. Ebenfalls erfindungsgemäss ist es aber auch, Adressen oder I/O-Konfigurationen in einem Multiplex-Mode über mindestens einen zusätzlichen elektrischen Eingang, realisiert durch zusätzliche, bei jedem BT vorhandene Pins, dynamisch einzugeben und den BT dadurch als Sender oder als Empfänger zu konfigurieren, ein Verfahren, welches dem Fachmann wohlbekannt ist.

Grundsätzlich beschreibt Fig. 8 auch den Aufbau des Master-BT 1, welcher jedoch, als direkt gespiesene Kopfstation, kein Energiespeicherelement 38 aufweist. Unterschiede bestehen weiter im Bus-Interface: Das Bus-Interface 28 ist beim Master-BT 1 durch das Master-Bus-Interface 31 ersetzt, worauf bereits in der Beschreibung von Fig. 3 resp. Fig. 4 eingegangen worden ist.

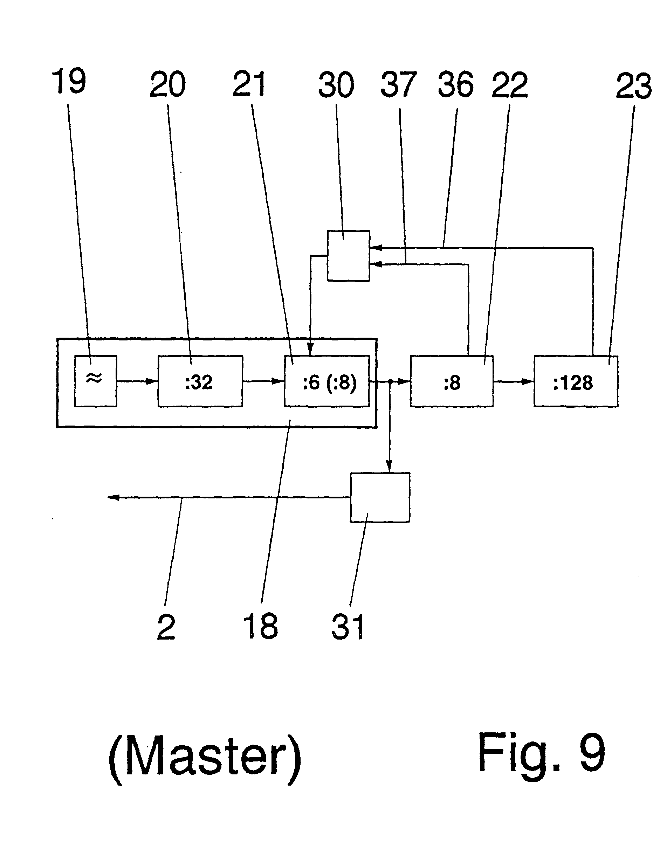

In Fig. 9 ist das Detailschaltbild eines BT in der Funktion als Master-BT 1 wiedergegeben. Der Master-BT 1 enthält eine Zeitbasis 18, welche einen internen Oszillator 19, einen Clockteiler 20 und einen Hilfszähler 21 enthält. Der Oszillator 19 schwingt beispielsweise mit einer Frequenz vom 1 MHz. Selbstverständlich ist im Prinzip jede andere Frequenz möglich. Die Frequenz ist durch die Wahl der Bit-Intervallzeit T, die gewünschte Anzahl möglicher Adressen im Bus-System sowie durch die gewünschte Anzahl Bits pro I/O-Port 26 bestimmt. Im Clockteiler 20, der dem Oszillator 19 nachgeschaltet ist, wird die Frequenz des Oszillators 19 beispielsweise fünfmal halbiert, also auf 1/32 der Oszillatorfrequenz reduziert. Die Zahl der Frequenzhalbierungen hängt einerseits von der Oszillatorfrequenz, anderseits von der angestrebten Bitfrequenz auf dem Bus 4 ab. Der Ausgang des Clockteilers 20 liegt am Eingang des Hilfszähler 21. Dieser hat zwei alternative Einstellungen: Im Normalfall eines gewöhnlichen Bits teilt er die Frequenz seines Eingangssignals durch 6. Die Periodendauer des Signals an seinem Ausgangs entspricht damit der Bit-Intervallzeit T, wie dies in Fig. 6 dargestellt ist. Sein Ausgang ist mit dem Eingang des Bit-Zählers 22 verbunden, welcher die Frequenz des Signals an seinem Eingang erneut teilt, hier durch 8. Der Ausgang des Bit-Zählers 22 liegt am Eingang des Byte-Zählers 23, welcher die Frequenz seines Eingangssignals nochmals, hier durch 128, teilt. Nach dem Durchlaufen eines ganzen Zyklus von 1024 Bits, in Varianten nach dem Durchlaufen einer ganzen Anzahl von Zyklen von je 1024 Bits, liegt sowohl an einem beim Bit-Zähler 22 weiter vorhandenen Ausgang Most Significant Bit 37, als auch an einem beim Byte-Zählers 23 weiter vorhandenen Ausgang Most Significant Byte 36 eine logische 1. Diese beiden Ausgänge 37 und 36 sind mit den Eingängen eines UND-Gate 30 verbunden, welches das logische Produkt dieser beiden Eingänge erzeugt. Der Ausgang des UND-Gates 30 liegt an einem weiteren beim Hilfszähler 21 vorhandenen Eingang. Liegt an diesem Eingang eine logische 1, so wird der Hilfszähler 21 so umgeschaltet, dass er die Frequenz seines Eingangssignals nicht mehr wie im Normalfall durch 6, sondern neu durch 8 teilt. Dadurch wird die Periodendauer und damit die Dauer dieses speziellen Bits um das Zeitintervall ΔT verlängert. Der Ausgang des Hilfszählers 21 ist mit dem Master-Bus-Interface 31 verbunden, dessen Ausgang seinerseits am Leiter 2 des Bus 4 liegt. Dadurch erscheint auf dem Bus 4, anschliessend an das Energie-Signal E, das in Fig. 7 dargestellte Synchronisierungs-Signal S, welches auch als ein um das Zeitintervall ΔT verlängertes Energie-Signal E beschrieben werden könnte.

In Fig. 10 ist das Detailschaltbild eines BT in der Funktion als Slave-BT 5 wiedergegeben, welcher im wesentlichen die gleichen Elemente wie der Master-BT 1 aufweist. Die Unterschiede zum Master-BT 1 bestehen einerseits darin, dass statt des Master-Bus-Interfaces 31 ein modifiziertes und oben bereits beschriebenes Bus-Interface 28 zur Anwendung kommt, und andererseits darin, dass jeder Slave-BT 5 zusätzlich zu den bereits bei der Beschreibung von Fig. 9 erwähnten Elemente zwei weitere Elemente enthält. Diese zusätzlichen Elemente sind ein Negativ-Flankendetektor 33 und ein Bitlängen-Detektor 32. Der Eingang des Negativ-Flankendetektors 33 ist mit dem Bus-Interface 28 verbunden und erzeugt zu Beginn des am Bus 4 anliegenden Pausen-Signals P an seinem Ausgang ein Signal Reset 34. Sowohl der Clockteiler 20 als auch der Hilfszähler 21 weisen, wie dies bei jedem Zähler üblich ist, Eingänge auf, über welche diese Zähler 20, 21 auf Null zurückgesetzt werden können. Mit diesen Eingängen ist der Ausgang des Negativflanken-Detektors 33 verbunden. Zu Beginn jedes Bits werden auf diese Weise sowohl der Clockteiler 20 als auch der Hilfszähler 21 auf Null zurückgesetzt. Statt des Ausgangs des Hilfszählers 21 liegt hier der Ausgang des Negativflanken-Detektors 33 am Bit-Zähler 22 und bewirkt damit ein synchrones Weiterschalten des Bit-Zählers 22 und des Byte-Zählers 23, da das Clocksignal für die Slaves in Form der negativen Flanke über den Bus 4 mitübertragen wird. Der Ausgang des Hilfszählers 21 liegt hingegen am Eingang des Bitlängen-Detektors 32. Die Zeitbasis 18 wird hier für die Zeitmessung benötigt, mit deren Hilfe der Bitlängen-Detektor 32 feststellt, ob ein gewöhnliches oder ein um das Synchronisierungs-Signal S, also ein um das Zeitintervall ΔT verlängertes Bit, auf dem Bus vorhanden ist. Ist das letztere der Fall, erzeugt der Bitlängen-Detektor 32 an seinem Ausgang ein Signal Master-Reset 35. Dieser Ausgang ist mit den auch beim Bit-Zähler 22 und beim Byte-Zähler 23 vorhandenen Eingängen verbunden, über welche diese Zähler 22, 23 zurückgesetzt werden können. Liegt also ein Synchronisierungs-Signal S am Bus 4, werden dadurch bei allen Slave-BT 5 sowohl Bit-Zähler 22 als auch Byte-Zähler 23 auf Null zurückgesetzt.

Wegen der weitgehenden Baugleichheit von Master-BT 1 und Slave-BT 5 wird, in einer Variante, eine Grundform eines BT, der alle Elemente sowohl des Master-BT 1 als auch des Slave-BT 5 enthält, mit Hilfe einiger weniger gleichzeitig schaltender, elektronisch oder mechanisch realisierter Schalter als Master-BT 1 oder als Slave-BT 5 so beschaltet, dass die jeweils nicht benötigten Elemente ausgeschaltet, und Ein- und Ausgänge verschiedener Elemente in der gewünschten, oben dargelegten Art zusammengeschaltet werden. Ebenfalls erfindungsgemäss ist es selbstverständlich, einen Teil oder alle der für einen BT benötigten Teil-Elemente auf einem einzigen Chip zu integrieren. Dieser kann auf diese Weise, wie dies beispielsweise von Operations-Verstärkern allgemein bekannt ist, durch einfachste äussere Beschaltung als Master-BT 1 oder als Slave-BT 5 ausgestaltet werden, und je als Sender oder als Empfänger konfiguriert werden.

Das erfindungsgemässe Bus-System eignet sich aufgrund der oben dargelegten Eigenschaften besonders für die Vielzahl von Anwendungen, in welchen die Uebermittlungszeiten nicht extrem kurz zu sein brauchen, also beispielsweise sogar in der Grössenordnung menschlicher Reaktionszeiten von etwa einer Zehntels-Sekunde liegen dürfen, während gleichzeitig der Verdrahtungsaufwand klein gehalten werden soll. Ein typisches Beispiel dafür ist die Verdrahtung in einem Schiff: Die Uebermittlung beispielsweise eines Treibstoffstandes auf eine Anzeige, oder die Uebermittlung von Befehlen für die Ein- oder Ausschaltung von Motoren oder anderen Verbrauchern ist in diesem an sich schon trägen System in der Regel nicht zeitkritisch. Weitere typische Beispiele sind Verdrahtungen in der Flugzeug- und Fahrzeug-Elektrik, beispielsweise für die Anzeige von Schliesszuständen von Türen, für die Uebermittlung von Befehlen zum Setzen von Lichtern, oder für Aehnliches mehr. Als weitere Anwendung kann das erfindungsgemässe Bus-System zur Steuerung von Fahrstühlen eingesetzt werden, und zwar sowohl bei den ortsfesten als auch bei den beweglichen Wählstationen. Die grossen Vorteile gegenüber herkömmlichen Steuerungen sind dabei offensichtlich. Aber auch bei vielen einfacheren Anwendungen, wie beispielsweise bei der Verdrahtung von Hausklingeln in einem Mehrfamilienhaus, lässt sich durch die Verwendung des erfindungsgemässen Bus-Systems der Gesamtaufwand verkleinern, können doch hier beispielsweise alle Klingel-Transformatoren eingespart und gleichzeitig der Verdrahtungsaufwand massiv reduziert werden.

## Patentansprüche

1. Bus-System zur störsicheren, zyklischen, seriellen Uebertragung von digitalen Messdaten oder digitalen Steuerbefehlen in Bruchteilen von Sekunden zwischen einer Vielzahl von über je ein Bus-Interface (28, 31) mit einem Bus (4) verbundenen Bus-Transceivern (BT), wobei jeder BT einen eigenen, mit ihm verbundenen I/O-Port (26) aufweist, welcher Speicherelemente für ein Byte enthält, **dadurch gekennzeichnet, dass**
- die Uebertragung sich nach einer ganzen Anzahl übertragener Zyklen wiederholt,
- jeder dieser Zyklen eine gegebene Anzahl von Bytes enthält,
- jedes dieser Bytes die gleiche Länge von mindestens zwei Bits aufweist,
- der Bus (4) aus genau zwei Leitern (2, 3) besteht,
- jedem BT je genau eine aus einer grossen Anzahl von möglichen binären Adressen ausgewählte Adresse eingeprägt ist,
- Mittel vorhanden sind, mit welchen jeder am Bus (4) angeschlossene BT, für jedes Bit separat, entweder als Sender oder als Empfänger konfiguriert werden kann,
- je mindestens zwei der Vielzahl von BT die gleiche Adresse aufweisen, wovon, für jedes Bit separat, wieder mindestens einer als Sender und ebenfalls mindestens einer als Empfänger konfiguriert ist,
- bei jedem am Bus (4) angeschlossen BT ein Komparator (24) vorhanden ist, welcher bei Gleichheit zwischen der diesem BT eingeprägter Adresse und der einem am Bus (4) anliegenden Byte entsprechenden Adresse ein Signal erzeugt, welches die Uebermittlung aller der diesem Byte entsprechenden Bits freigibt,
- bei jedem Bit alle als Sender konfigurierten BT mit gleicher, diesem Bit entsprechender Adresse genau zu einem diesem Bit entsprechenden Zeitpunkt ihre jeweiligen Werte gleichzeitig senden, und dass das Resultat einer logischen Elementarverknüpfung all dieser Werte zu diesem Zeitpunkt als zu übermittelnder Wert dieses Bits auf dem Bus (4) anliegt,
- auf dem Bus (4) Clocksignale in Form negativer Flanken vorhanden sind und über den Bus (4) übertragen werden,
- alle als Empfänger konfigurierten BT mit gleicher, diesem Bit entsprechender Adresse Mittel (22, 23) enthalten, um diese Clocksignale zu zählen und damit bei jedem Bit den auf dem Bus (4) liegenden Wert genau zu einem diesem Bit entsprechenden Zeitpunkt gleichzeitig zu empfangen,
- Mittel vorhanden sind, mit welchen die Energieversorgung aller BT sowie der mit ihnen verbundenen Verbraucher, die Synchronisierung aller BT bezüglich des Anfangs eines ersten Zyklus, die Synchronisierung aller BT bezüglich des Anfangs eines jeden Bits sowie die eigentliche Uebermittlung dieser Bits über den Bus (4) realisiert werden.

2. Bus-System nach Patentanspruch 1, **dadurch gekennzeichnet, dass** die Mittel, mit welchen jeder am Bus (4) angeschlossene BT entweder als Sender oder als Empfänger konfiguriert werden kann, darin bestehen, dass
- jeder BT ein Konfigurationselement (27) enthält, welches mit diesem BT verbunden ist,
- das Konfigurationselement (27) mindestens einen mit diesem verbundenen, für die Konfigurierung dieses BT als Sender oder als Empfänger massgeblichen mechanischen Kurzschlussschalter enthält,
- durch die Stellung der vorhandenen massgeblichen Kurzschlusschalter I/O-Konfigurationen statisch festgelegt werden können.

3. Bus-System nach Patentanspruch 1, **dadurch gekennzeichnet, dass** die Mittel, mit welchen jeder am Bus (4) angeschlossene BT entweder als Sender oder als Empfänger konfiguriert werden kann, darin bestehen, dass
- jeder BT ein Konfigurationselement (27) enthält, welches mit diesem BT verbunden ist,
- das Konfigurationselement (27) einen elektrischen Eingang enthält,
- über diesen Eingang in einem Multiplex-Mode I/O-Konfigurationen dynamisch eingegeben werden können,
- gewisse dieser Eingaben den BT als Sender, andere den BT als Empfänger konfigurieren.

4. Bus-System nach einem der Patentansprüche 2 oder 3, **dadurch gekennzeichnet, dass**
- der I/O-Port (26) über das Konfigurationselement (27) für eine doppelte Uebertragung konfiguriert werden kann,
- der I/O-Port (26) Speicher- und Vergleichselemente zum Vergleich von einander entsprechenden Werten (D0 - D7) aus zwei unmittelbar aufeinanderfolgenden Zyklen enthält,
- der I/O-Port (26) in der Konfiguration für eine doppelte Uebertragung eine Aenderung dieser Werte (D0 D7) erst nach zwei Zyklen mit untereinander je übereinstimmenden Werten (D0 - D7) am I/O-Port 26 ausgibt.

5. Bus-System nach Patentanspruch 1, **dadurch gekennzeichnet**, **dass**-
- die Anzahl der pro Byte übertragenen Bits eine Zweierpotenz ist,
- die Anzahl der pro Zyklus übertragenen Bits ebenfalls eine Zweierpotenz ist.

6. Bus-System nach Patentanspruch 1, **dadurch gekennzeichnet**, **dass**-
- die Anzahl der pro Byte übertragenen Bits 2³ = 8 ist,
- die Anzahl der pro Zyklus übertragenen Bits 2¹⁰ = 1024 ist.

7. Bus-System nach Patentanspruch 1, **dadurch gekennzeichnet, dass** die Mittel, mit welchen die Energieversorgung aller BT, die Synchronisierung aller BT bezüglich des Anfangs eines ersten Zyklus, die Synchronisierung aller BT bezüglich des Anfangs eines jeden Bits sowie die eigentliche Uebermittlung dieser Bits über den Bus (4) realisiert wird,
- genau einen aus allen der am Bus angeschlossenen BT enthalten, der als Master-BT (1) ausgelegt ist,
- der Master-BT (1) mit einer externen Energiequelle (8, 9) verbunden ist,
- der Master-BT (1) eine Zeitsteuerungs- und Synchronisationsschaltung (29) enthält,
- die Zeitsteuerungs- und Synchronisationsschaltung (29) eine Zeitsteuerungsschaltung (11) und einen elektronischen Schalter (10) enthält,
- der Schalter (10), gesteuert durch die Zeitsteuerschaltung (11), während je gegebener Zeitintervalle, hintereinander für jedes Bit zunächst ein Pausen-Signal P, dann ein Daten-Signal D und daraufolgend ein Energie-Signal E am Bus (4) anlegt,
- der Schalter (10), gesteuert durch die Zeitsteuerschaltung (11), nach einer ganzen Anzahl von Zyklen, bestehend aus einer grossen Anzahl von Bits, ein Synchronisierung-Signal S am Bus (4) anlegt.

8. Bus-System nach Patentanspruch 1, **dadurch gekennzeichnet, dass** die Mittel, mit welchen die Energieversorgung aller BT, die Synchronisierung aller BT bezüglich des Anfangs eines ersten Zyklus, die Synchronisierung aller BT bezüglich des Anfangs eines jeden Bits sowie die eigentliche Uebermittlung dieser Bits über den Bus (4) realisiert werden,
- eine Vielzahl von am Bus angeschlossenen BT enthalten, welche als Slave-BT (5) ausgelegt sind,
- jeder Slave-BT (5) eine Zeitsteuerungs- und Synchronisationsschaltung (29) enthält,
- jeder Slave-BT (5), gesteuert durch die Zeitsteuerungs- und Synchronisationsschaltung (29), während des am Bus (4) anliegenden Pausen-Signals P seine Zeitsteuerungsschaltung (11) auf einen dem Beginn eines Bits entsprechenden Zustand zurücksetzt,
- jeder BT, gesteuert durch die Zeitsteuerungs- und Synchronisationsschaltung (29), während des am Bus (4) anliegenden Daten-Signals D das entsprechende Bit überträgt, sofern dieses der diesem BT eingeprägten Adresse entspricht,
- jeder Slave-BT (5) ein Energiespeicherelement (38) enthält,
- jeder Slave-BT (5), gesteuert durch die Zeitsteuerungs- und Synchronisationsschaltung (29), während des am Bus (4) anliegenden Energie-Signals E die anschlüsse seines Energiespeicherelements (38) mit den Leitern (2, 3) des Bus (4) verbindet, wodurch das Energiespeicherelement (38) jedes Slave-BT (5) wieder aufgeladen wird,
- der Ausgang des Energiespeicherelements (38) mit dem Speiseeingang des Slave-BT (5) verbunden ist,
- jeder Slave-BT (5), gesteuert durch die Zeitsteuerungs- und Synchronisationsschaltung (29), bei Vorliegen eines am Bus (4) anliegenden Synchronisierungs-Signals S auf einen dem Beginn eines Zyklus einer Vielzahl von Bits entsprechenden Zustand zurückgesetzt wird.

9. Bus-System nach einem der Patentansprüche 7 oder 8, **dadurch gekennzeichnet, dass**
- das Energiespeicherelement (38) an seinem Eingang eine Diode (14) enthält, mit deren Ausgang sowohl ein Speicher-Kondensator (15) als auch der Eingang eines Stabilisators (16) verbunden sind,
- der Ausgang des Stabilisators (16) den Ausgang des Speicherelements (38) bildet.

10. Bus System nach einem der Patentansprüche 7 oder 8, **dadurch gekennzeichnet, dass** die ganze Anzahl von Zyklen mit einer Vielzahl von Bits zwischen zwei Synchronisations-Signalen S genau eins ist.

11. Bus-System nach einem der Patentansprüche 7 oder 8, **dadurch gekennzeichnet, dass** die ganze Anzahl von Zyklen mit einer Vielzahl von Bits zwischen zwei Synchronisations-Signalen S grösser als eins ist.

12. Bus-System nach einem der Patentansprüche 7 oder 8, **dadurch gekennzeichnet, dass**
- eine Gleichspannungsquelle (9) und eine Gleichstromquelle (8) vorhanden und in Serie mit dem Bus (4) verbunden sind,
- der Master-BT (1) während des Pausen-Signals P die Leiter (2, 3) kurzschliesst,
- der Master-BT (1) während des Daten-Signals D die Leiter (2, 3) kurzschliesst, um ein Bit mit Wert 0 zu senden und offen lässt, um ein Bit mit Wert 1 zu senden,
- der Master-BT (1) sowohl während des Energie-Signals E als auch während des Synchronisierungs-Signals S die Anschlüsse der Gleichspannungsquelle (9) mit den Leitern (2, 3) verbindet und gleichzeitig die Anschlüsse der Gleichstromquelle (8) kurzschliesst.

13. Bus-System nach einem der Patentansprüche 7 oder 8, **dadurch gekennzeichnet, dass**
- die Zeitsteuerungs- und Synchronisationsschaltung (29) in ihrer Zeitbasis (11) einen Oszillator (19) enthält, dessen Ausgang mit dem Eingang eines Clockteilers (20) verbunden ist, welcher die Frequenz des Oszillators (19) eine gewisse Anzahl mal je halbiert,
- der Ausgang des Clockteilers (20) mit dem Eingang eines ebenfalls in der Zeitbasis (11) vorhandenen Hilfszählers (21) verbunden ist, der diese Frequenz im Normalfall durch sechs und im Spezialfall, bei Auftreten eines Synchronisierungs-Signals S, durch acht teilt,
- die Zeitsteuerungs- und Synchronisationsschaltung (29) weiter einen Bit-Zähler (22), einen Byte-Zähler (23) und ein UND-Gate (30) mit zwei Eingängen enthält, die mit dem Ausgang Most Significant Bit (37) des Bit-Zählers (22) und mit dem Ausgang Most Significant Byte (36) des Byte-Zählers (23) verbunden ist und dessen Ausgang mit einem weiteren beim Hilfszähler (21) vorhandenen Eingang zur Zurücksetzung dieses Zählers auf Null verbunden ist.

14. Bus-System nach Patentanspruch 13, **dadurch gekennzeichnet, dass** der Hilfszähler (21) des Master-BT (1) beim Stand Null bis zu einer ersten Erhöhung seines Zählerstandes ein Pausen-Signal P, zwischen erster und zweiter Erhöhung ein Daten-Signal D, im Normalfall eines gewöhnlichen Bits zwischen zweiter und sechster Erhöhung ein Energie-Signal E, und im Spezialfall eines Synchronisierungs-Signal S, zusätzlich zwischen sechster und achter Erhöhung ein Synchronisierungs-Signal S auf den Bus (4) legt, sodass das Pausen-Signal P und das Daten-Signal D gleich lange dauern, das Synchronisierungs-Signal S doppelt so lange dauert wie das Pausen-Signal P und das Energie-Signal E doppelt so lange dauert wie das Synchronisierungs-Signal S.

15. Bus-System nach Patentanspruch 13, **dadurch gekennzeichnet, dass**
- der Oszillator (19) eine Frequenz zwischen 250 kHz und 4 MHz aufweist,
- der Clockteiler (20) die Frequenz des Oszillators (19) fünf mal je halbiert, also durch 32 teilt.

16. Bus-System nach Patentanspruch 13, **dadurch gekennzeichnet, dass** in der Zeitsteuerungs- und Synchronisationsschaltung (29) bei dem als Master-BT (1) ausgestalteten BT der Ausgang des Hilfszählers (21) sowohl mit dem Eingang des Bit-Zählers (22) als auch mit dem Eingang des Master-Bus-Interface (31) verbunden ist.

17. Bus-System nach Patentanspruch 13, **dadurch gekennzeichnet, dass** in der Zeitsteuerungs- und Synchronisationsschaltung (29) bei dem als Slave-BT (5) ausgestalteten BT
- ein Bitlängen-Detektor (32) mit einem Eingang und einem Ausgang vorhanden ist,
- der Ausgang des Hilfszählers (21) mit dem Eingang des Bitlängen-Detektors (32) verbunden ist,
- der Ausgang des Bitlängen-Detektors (32) mit den zurücksetzenden Eingängen sowohl des Bit-Zählers (22) als auch des Byte-Zählers (23) verbunden ist,
- der Bitlängen-Detektor (32) bei Vorliegen eines Synchronisierungs-Signals S am Bus (4) ein Signal Master-Reset (35) erzeugt, wodurch der Bit-Zähler (22) und der Byte-Zähler (23) auf Null zurückgesetzt werden,
- ein Negativflanken-Detektor (33) mit einem Eingang und einem Ausgang vorhanden ist,
- der Eingang des Negativflanken-Detektors (33) mit dem Bus-Interface (28) verbunden ist,
- der Ausgang des Negativflanken-Detektors (33) mit zurücksetzenden Eingängen sowohl des Clockteilers (20) als auch des Hilfszählers (21) verbunden ist,
- der Negativflanken-Detektor (33) die zu Beginn jedes Pausen-Signals P als Beginn eines neuen Bits am Bus (4) auftretende negative Flanke detektiert und als Folge davon ein Signal Reset (34) erzeugt, wodurch der Clockteiler (20) und der Hilfszähler (21) auf Null zurückgesetzt werden.

18. Bus-System nach einem der Patentansprüche 16 oder 17, **dadurch gekennzeichnet, dass** im I/O-Konfigurations-Element (27) eine gewisse Anzahl gleichzeitig schaltender Schalter vorhanden sind, mit welchen der zugeghörige BT so beschaltet werden kann, dass dieser als Master-BT (1) oder als Slave-BT (5) ausgestaltet wird, indem die jeweils nicht benötigten Elemente ausgeschaltet, und Einund Ausgänge verschiedener Elemente in der dem Master-BT (1) repektive dem Slave-BT (5) entsprechenden Art zusammengeschaltet werden.

19. Bus-System nach einem der Patentansprüche 1 bis 18, **dadurch gekennzeichnet, dass** bis auf einen alle am Bus (4) angeschlossenen BT vor ihrem Eingang zunächst einen mit diesem verbundenen Vollweggleichrichter (17) aufweisen, wodurch Verpolungsfehler bei der Installation des Bus-Systems ausgeschlossen sind.

20. Bus-System nach einem der Patentansprüche 1 bis 19, **dadurch gekennzeichnet, dass** eine Vielzahl der in einem BT enthaltenen Baugruppen auf einem einzigen Chip integriert sind.

## Claims

1. A bus system for the interference protected, cyclical, serial transmission of digital test data or digital control commands in fractions of a second between a multiplicity of bus transceivers (BT) each connected via one bus interface (28, 31) to a bus (4), whereby each BT has its own I/O port (26) connected to it, which includes storage elements for one byte,
**Characterised in that**,
- the transmission is repeated following a complete cycle of transmitted cycles,
- each of these cycles includes a given number of bytes,
- each of these bytes has the same length of at least two bits,
- the bus (4) comprises exactly two conductors (2, 3),
- each BT is imprinted with exactly one address from a large number of possible binary addresses,
- means are available, with which each BT connected to the bus (4), can be separately configured as a transmitter or a receiver for each bit,
- at least two of the multiplicity of BTs have the same address, of which, separately for each bit, at least one again is configured as a transmitter and similarly at least one as a receiver,
- in each BT connected to the bus (4) a comparator (24) is present, which generates a signal with an identity between this address imprinted on the BT and the byte corresponding to an address appearing on the bus (4), which releases the transmission of all the bits corresponding to this byte,
- at each bit all the BTs configured as transmitters with the address corresponding to this bit, at a point in time exactly corresponding to this bit, transmit their current values, and that the result of a logical elementary operation on all these values at this point in time appears on the bus (4) as the value to be transmitted,
- clock signals in the form of negative going edges are present on the bus (4) and are transmitted via the bus (4),
- all the BTs configured as receivers with the same address corresponding to this bit include means of counting these clock signals and thereby of receiving simultaneously at each bit the value appearing on the bus (4) at exactly the timepoint corresponding to this bit,
- means are present with which the energy supply for all BTs as well as the loads connected to them, the synchronisation of all BTs with reference to the start of each bit as well as the actual transmission of these bits via the bus (4) can be realised.

2. A bus system according to Claim 1, **characterised in that** the means, with which each BT connected to the bus (4) can be configured either as a transmitter or as a receiver, comprise
- each BT includes a configuration element (27), which is connected to this BT,
- the configuration element (27) includes at least one decisive mechanical short circuiting switch connected to it for the configuration of the BT as transmitter or receiver,
- by the position of the decisive short circuiting switches the I/O configurations can be established statically.

3. A bus system according to Claim 1, **characterised in that** the means, with which each BT connected to the bus (4) can be configured either as a transmitter or as a receiver, comprise
- each BT includes a configuration element (27), which is connected to this BT,
- the configuration element (27) includes an electrical input,
- I/O configurations can be entered dynamically via this input in a multiplex mode,
- Certain of these entries configure the BT as a transmitter, others as a receiver.

4. A bus system according to one of the Claims 2 or 3, **characterised in that**
- the I/O port (26) can be configured via the configuration element (27) for a doubled transmission,
- the I/O port (26) includes storage and comparator elements for the comparison of values corresponding with each other (D0 - D7) from two immediately sequential cycles,
- the I/O port (26), in the configuration for doubled transmission outputs a change to these values (D0 - D7) at the I/O port (26) only after two cycles with each value agreeing with the corresponding other value (D0-D7).

5. A bus system according to Claim 1, **characterised in that**
- the number of bits transmitted per byte is a power of two,
- the number of bits transmitted per cycle is similarly a power of two.

6. A bus system according to Claim 1, **characterised in that**
- the number of bits transmitted per byte is 2³ = 8,
- the number of bits transmitted per cycle is 2¹⁰ = 1024

7. A bus system according to Claim 1, **characterised in that** the means, with which the energy supply of all BTs, the synchronising of all BTs with reference to start of a first cycle, the synchronising of all BTs with reference to the start of each bit as well as the actual transmission of this bit on the bus (4) is realised,
- include exactly one from all the BTs connected to the bus, which is designed as master BT (1),
- the master BT (1) is connected to an external source of energy (8, 9)
- the master BT (1) includes a time control and synchronising circuit (29),
- the time control and synchronising circuit (29) includes a time control circuit (11) and an electronic switch (10),
- the switch (10), controlled by the time control circuit (11), during each given time interval, places after each other for each bit first a pause signal P, then a data signal D and thereafter an energy signal E on the bus (4),
- the switch (10), controlled by the time control circuit, following a complete number of cycles, comprising a large number of bits, places a synchronising signal S onto the bus (4).

8. A bus system according to Claim 1, **characterised in that** the means, with which the energy supply of all BTs, the synchronising of all BTs with reference to start of the first cycle, the synchronising of all BTs with reference to the start of each bit as well as the actual transmission of this bit on the bus (4) is realised,
- include a multiplicity of BTs connected to the bus (4), which are designed as slave BTs (5)
- each slave BT (5) includes a time control and synchronising circuit (29),
- each slave BT (5) , under the control of the time control and synchronising circuit (29), during the pause signal P appearing on the bus (4) resets its time control circuit (11) to a condition corresponding to the start of a bit,
- each BT, under the control of the time control and synchronising circuit (29), during the data signal D appearing on the bus (4) transmits the corresponding bit, providing that this corresponds to the address imprinted on that BT,
- each slave BT (5) includes an energy storing element (38),
- each slave BT (5), under the control of the time control and synchronising circuit (29), during the energy signal E appearing on the bus (4), connects the terminals of its energy storage element (38) to the conductors (2, 3) of the bus (4), whereby the energy storage element (38) is recharged,
- the output of the energy storage element (38) is connected to the feed input of the slave BT (5),
- each slave BT (5), under the control of the time control and synchronising circuit (29), on the appearance of a synchronising signal S on the bus (4) is reset to a condition corresponding to the start of a cycle of a multiplicity of bits.

9. A bus system according to one of the Claims 7 or 8, **characterised in that**
- the energy storage element (38) includes a diode (14) at its input, to whose output both a storage capacitor (15) and also the input of a stabiliser (16) are connected,
- the output of the stabiliser (16) forms the output of the storage element (38).

10. A bus system according to one of the Claims 7 or 8, **characterised in that** the whole number of cycles with a multiplicity of bits between two synchronising signals S is exactly one.

11. A bus system according to one of the Claims 7 or 8, **characterised in that** the whole number of cycles with a multiplicity of bits between two synchronising signals S is greater than one.

12. A bus system according to one of the Claims 7 or 8, **characterised in that**
- a direct current voltage source (9) and a direct current source (8) are present and are connected in series with the bus (4),
- the master BT (1) short circuits the conductors (2, 3) during the pause signal P,
- the master BT (1) short circuits the conductors (2, 3) during the data signal D, in order to transmit a bit with the value 0 and leaves them open, so as to transmit a bit with the value 1,
- the master BT (1) connects the terminals of the direct current voltage source (9) to the conductors (2, 3) and at the same time short circuits the terminals of the direct current source (8) both during the energy signal E and also during the synchronising signal S.

13. A bus system according to one of the Claims 7 or 8, **characterised in that**
- the time control and synchronising circuit (29) includes, in its time base (11), an oscillator (19) whose output is connected to the input of a clock divider (20), which halves the frequency of the oscillator (19) a certain number of times,
- the output of the clock divider (20) is connected to the input of an auxiliary counter (21), also present in the time base (11), which in the normal case divides this frequency by six and in the special case, on the appearance of a synchronising signal S, by eight.
- the time control and synchronising circuit (29) has also a bit counter (22), a byte counter (23) and an AND Gate (30) with two inputs, which is connected to the Most Significant Bit output of the bit counter (22) and to the Most Significant Byte (36) of the byte counter (23) and whose output is connected to a further available input of the auxiliary counter (21) to reset this counter to null.

14. A bus system according to Claim 13, **characterised in that** the auxiliary counter (21) of the master BT (1) applies onto the bus (4) a pause signal P in its null position up to a first increment of its counter position, between the first and the second increment a data signal D, in the normal case of a customary bit between the second and sixth increment an energy signal E, and in the special case of a synchronising signal S, additionally between the sixth and the eighth increment a synchronising signal S, so that the pause signal P and the data signal D last for the same time, the synchronising signal S lasts twice as long as the pause signal P and the energy signal lasts twice as long as the synchronising signal S.

15. A bus system according to Claim 13, **characterised in that**
- the oscillator (19) has a frequency between 250kHz and 4MHz,
- the clock divider (20) halves the frequency of the oscillator (19) five times, that is divides it by 32.

16. A bus system according to Claim 13, **characterised in that** in the time control and synchronising circuit (29) in a BT configured as a master BT (1) the output of the auxiliary counter (21) is connected both to the input of the bit counter (22) and also to the input of the master-bus interface (31).

17. A bus system according to Claim 13, **characterised in that** in the time control and synchronising circuit (29) in a BT configured as a slave BT (5)
- a bit length detector (32) is present with an input and an output,
- the output of the auxiliary counter (21) is connected to the input of the bit length detector (32),
- the output of the bit length detector (32) is connected to the resetting inputs both of the bit counter (22) and of the byte counter (23),
- the bit length detector (32) generates a master reset signal at the appearance of a synchronising signal S on the bus (4), whereby the bit counter (22) and the byte counter (23) are reset to null,
- a negative edge detector (33) is present with an input and an output,
- the input of the negative edge detector (33) is connected to resetting inputs both of the clock divider (20) and also of the auxiliary counter (21),
- the negative edge detector (33) detects the negative edge appearing on the bus (4) at the start of each pause signal P as the start of a new bit and as a result thereof generates a reset signal (34), whereby the clock divider (20) and the auxiliary counter (21) are reset to null.

18. A bus system according to one of the Claims 16 or 17, **characterised in that** in the I/O configuration element (27) a certain number of simultaneously operating switches are present, with which the associated BT can be switched so that it is configured as a master BT (1) or as a slave BT (5), **in that** the elements not currently required are switched out, and inputs and outputs of various elements in the master BT (1) or the slave BT (5) are connected together in a suitable manner.

19. A bus system according to one of the Claims 1 to 18, **characterised in that** all but one of the BTs connected to the bus (4) have a full wave rectifier in front of their inputs and immediately connected to it, whereby polarisation errors in the installation are excluded.

20. A bus system according to one of the Claims 1 to 19, **characterised in that** a multiplicity of the assemblies included in a BT are integrated onto a single chip.

## Revendications

1. Système de bus destiné à la transmission sérielle, cyclique et insensible aux parasites, réalisée en fractions de seconde, de données de mesure numériques ou d'instructions de commande numériques entre une pluralité de terminaux de bus (BT) reliés à un bus (4) par l'intermédiaire d'une interface de bus (28, 31) propre, chaque BT présentant un port E/S (26) propre qui lui est relié et qui contient des éléments de mémorisation pour un octet, **caractérisé en ce que**
- la transmission se répète après une quantité entière de cycles transférés,
- chacun de ces cycles contient une quantité donnée d'octets,
- chacun de ces octets présente la même longueur d'au moins deux bits,
- le bus (4) se compose d'exactement de deux conducteurs (2, 3),
- exactement une adresse choisie parmi une quantité élevée d'adresses binaires possibles est inscrite dans chaque BT,
- il existe des moyens avec lesquels chaque BT connecté au bus (4) peut être configuré en émetteur ou en récepteur de manière séparée pour chaque bit,
- au moins deux BT pris dans la pluralité de BT présentent la même adresse, l'un au moins de nouveau étant configuré en émetteur et l'un au moins également étant configuré en récepteur, ce de manière séparée pour chaque bit,
- sur chaque BT relié au bus (4), il existe un comparateur (24) qui génère un signal en cas d'identité entre l'adresse inscrite dans ce BT et l'adresse correspondant à un octet situé sur le bus (4), ce signal autorisant la transmission de tous les bits correspondant à cet octet,
- pour chaque bit, tous les BT configurés en émetteur avec la même adresse correspondant à ce bit envoient simultanément leurs valeurs respectives, et le résultat d'une jonction élémentaire logique de toutes ces valeurs est à ce moment présent sur le bus (4) comme valeur de ce bit à transférer,
- des signaux d'horloge sous la forme de flancs d'impulsion négatifs se trouvent sur le bus (4) et sont transmis par l'intermédiaire du bus (4),
- tous les BT configurés en récepteur de même adresse correspondant à ce bit contiennent des moyens (22, 23) de sorte à compter des signaux d'horloge et recevoir simultanément pour chaque bit la valeur située sur le bus (4), ce à un moment correspondant exactement à ce bit,
- il existe des moyens qui permettent l'alimentation en énergie de tous les BT ainsi que des dissipateurs qui y sont reliés, la synchronisation de tous les BT relative au début d'un premier cycle, la synchronisation de tous les BT relative au début de chacun de ces bits ainsi que le transfert à proprement dit de ces bits via le bus (4).

2. Système de bus selon la revendication 1, **caractérisé en ce que** les moyens avec lesquels chaque BT relié au bus (4) est configuré en émetteur ou en récepteur consistent **en ce que**
- chaque BT contient un élément de configuration (27) qui lui est relié,
- l'élément de configuration (27) contient au moins un interrupteur de court-circuitage mécanique, déterminant pour la configuration de ce BT en émetteur ou récepteur, qui lui est relié,
- la position des interrupteurs de court-circuitage déterminants en présence permet de définir statiquement des configurations E/S.

3. Système de bus selon la revendication 1, **caractérisé en ce que** les moyens avec lesquels chaque BT connecté au bus (4) peut être configuré en émetteur ou en récepteur consistent **en ce que**
- chaque BT contient un élément de configuration (27) qui lui est relié,
- l'élément de configuration (27) comprend une entrée électrique,
- des configurations E/S peuvent être introduites dynamiquement en mode multiplex par l'intermédiaire de cette entrée,
- certaines de ces données introduites configurent le BT en émetteur, d'autres le configurent en récepteur.

4. Système de bus selon l'une des revendications 2 ou 3, **caractérisé en ce que**
- le port E/S (26) peut être configuré pour une transmission double par l'intermédiaire de l'élément de configuration (27),
- le port E/S (26) contient des éléments de mémorisation et de comparaison destinés à comparer des valeurs se correspondant (D0 - D7) provenant de deux cycles directement consécutifs,
- le port E/S (26) configuré pour une transmission double ne sort une modification de ces valeurs (D0 - D7) qu'après deux cycles présentant des valeurs coïncidentes (D0 - D7) sur le port E/S (26).

5. Système de bus selon la revendication 1, **caractérisé en ce que** le nombre de bits transmis par octet est une puissance de deux
- le nombre de bits transmis par cycle est également une puissance de deux.

6. Système de bus selon la revendication 1, **caractérisé en ce que**
- le nombre de bits transmis par octet est 2³ = 8,
- le nombre de bits transmis par cycle est 2¹⁰ = 1024.

7. Système de bus selon la revendication 1, **caractérisé en ce que** les moyens qui permettent l'alimentation en énergie de tous les BT, la synchronisation de tous les BT relative au début d'un premier cycle, la synchronisation de tous les BT relative au début de chacun de ces bits ainsi que le transfert à proprement dit de ces bits via le bus (4)
- comprennent exactement un BT parmi tous les BT connectés au bus qui est conçu comme un BT maître (1),
- le BT maître (1) est relié à une source d'énergie externe (8, 9),
- le BT maître (1) comprend un circuit de commande de temps et de synchronisation (29),
- le circuit de commande de temps et de synchronisation (29) contient un circuit de commande de temps (11) et un interrupteur électronique (10),
- l'interrupteur (10) piloté par le circuit de commande de temps (11) place pour chaque bit sur le bus 4 un signal d'arrêt P suivi d'un signal de données D, lui-même suivi d'un signal d'énergie E, ce pendant chaque intervalle de temps donné,
- l'interrupteur (10) piloté par le circuit de commande de temps (11) place sur le bus 4 un signal de synchronisation S en fin d'une quantité entière de cycles constitués d'une grande quantité de bits.

8. Système de bus selon la revendication 1, **caractérisé en ce que** les moyens qui permettent l'alimentation en énergie de tous les BT, la synchronisation de tous les BT relative au début d'un premier cycle, la synchronisation de tous les BT relative au début de chacun de ces bits ainsi que le transfert à proprement dit de ces bits via le bus (4)
- comprennent une pluralité de BT connectés au bus qui sont conçus comme des BT esclaves (5),
- chaque BT esclave (5) comprend un circuit de commande de temps et de synchronisation (29),
- chaque BT esclave (5) piloté par le circuit de commande de temps et de synchronisation (29) ramène son circuit de commande de temps (11) à un état correspondant au début de chaque bit pendant le signal d'arrêt P placé sur le bus (4),
- chaque BT esclave (5) piloté par le circuit de commande de temps et de synchronisation (29) transmet le bit correspondant pendant le signal de données D placé sur le bus (4) dans la mesure où ce bit coïncide avec l'adresse inscrite dans le BT,
- chaque BT esclave (5) comprend un élément accumulateur d'énergie (38),
- chaque BT esclave (5) piloté par le circuit de commande de temps et de synchronisation (29) connecte les bornes de son élément accumulateur d'énergie (38) avec les conducteurs (2, 3) du bus (4) pendant le signal d'énergie E placé sur le bus (4), ce qui recharge l'élément accumulateur d'énergie (38) de chaque BT esclave (5),
- la sortie de l'élément accumulateur d'énergie (38) est reliée à l'entrée d'alimentation du BT esclave (5),
- chaque BT esclave (5) piloté par le circuit de commande de temps et de synchronisation (29) est, en présence d'un signal de synchronisation S placé sur le bus (4), ramené à un état correspondant au début d'un cycle d'une pluralité de bits.

9. Système de bus selon l'une des revendications 7 ou 8, **caractérisé en ce que**
- l'élément accumulateur d'énergie (38) comprend à son entrée une diode (14) à la sortie de laquelle sont reliés aussi bien un condensateur de puissance (15) que l'entrée d'un stabilisateur (16),
- la sortie du stabilisateur (16) forme la sortie de l'élément d'accumulation (38).

10. Système de bus selon l'une des revendications 7 ou 8, **caractérisé en ce que** la quantité entière de cycles avec une pluralité de bits est exactement égale à un entre deux signaux de synchronisation S.

11. Système de bus selon l'une des revendications 7 ou 8, **caractérisé en ce que** la quantité entière de cycles avec une pluralité de bits est supérieure à un entre deux signaux de synchronisation S.

12. Système de bus selon l'une des revendications 7 ou 8, **caractérisé en ce que**
- il existe une source de tension continue (9) et une source de courant continu (8) qui sont reliées en série avec le bus (4),
- le BT maître (1) court-circuite les conducteurs (2, 3) pendant le signal d'arrêt P,
- le BT maître (1) court-circuite les conducteurs (2, 3) pendant le signal de données D de sorte à envoyer un bit de valeur 0 et laisse ouvert pour envoyer un bit de valeur 1,
- le BT maître (1) connecte les bornes de la source de tension continue (9) avec les conducteurs (2, 3) tout en court-circuitant les bornes de la source de courant continu (8), aussi bien pendant le signal d'énergie E que pendant le signal de synchronisation S.

13. Système de bus selon l'une des revendications 7 ou 8, **caractérisé en ce que**
- le circuit de commande de temps et de synchronisation (29) contient dans sa base de temps (11) un oscillateur (19) dont la sortie est reliée à l'entrée d'un diviseur de signaux d'horloge (20) qui un certain nombre de fois divise par deux la fréquence de l'oscillateur (19),
- la sortie du diviseur de signaux d'horloge (20) est reliée à l'entrée d'un compteur auxiliaire (21) également placé dans la base de temps (11), lequel divise cette fréquence par six en cas normal et par huit dans le cas spécial où survient un signal de synchronisation S,
- le circuit de commande de temps et de synchronisation (29) comprend de plus un compteur de bits (22), un compteur d'octets (23) et une porte ET (30) avec deux entrées qui est reliée à la sortie du bit le plus significatif (37) du compteur de bits et à la sortie de l'octet le plus significatif (36) du compteur d'octets (23) et dont la sortie est reliée avec une autre entrée située sur le compteur auxiliaire (21) et destinée à la remise à zéro de ce compteur.

14. Système de bus selon la revendication 13 **caractérisé en ce que** le compteur auxiliaire (21) du BT maître (1) place sur le bus (4) un signal d'arrêt P de l'état zéro jusqu'à la première augmentation de sa position de compteur, un signal de données D entre la première et la deuxième augmentation, un signal d'énergie E en cas normal d'un bit ordinaire et un signal de synchronisation S dans un cas spécial entre la deuxième et la sixième augmentation et encore un signal de synchronisation S entre la sixième et la huitième augmentation de telle manière que le signal d'arrêt P et le signal de données D soient de même durée, le signal de synchronisation S soit deux fois plus long que le signal d'arrêt P et le signal d'énergie E soit deux fois plus long que le signal de synchronisation S.

15. Système de bus selon la revendication 13, **caractérisé en ce que**
- l'oscillateur (19) présente une fréquence comprise entre 250 kHz et 4 MHz, le diviseur de signaux d'horloge (20) divise la fréquence de l'oscillateur (19) par deux à cinq reprises, c'est-à-dire qu'il la divise par 32.

16. Système de bus selon la revendication 13, **caractérisé en ce que** la sortie du compteur auxiliaire (21) dans le circuit de commande de temps et de synchronisation (29) installé sur le BT aménagé en BT maître (1) est reliée avec l'entrée du compteur de bits (22) comme avec l'entrée de l'interface maître-bus (31).

17. Système de bus selon la revendication 13, **caractérisé en ce que** dans le circuit de commande de temps et de synchronisation (29) installé sur le BT aménagé en BT esclave (5)
- il existe un détecteur de longueur de bit (32) avec une entrée et une sortie
- la sortie du compteur auxiliaire (21) est reliée à l'entrée du détecteur de longueur de bit (32),
- la sortie du détecteur de longueur de bit (32) est reliée avec les entrées réinitialisées du compteur de bits (22) comme du compteur d'octets (23),
- en présence d'un signal de synchronisation S sur le bus (4), le détecteur de longueur de bit (32) génère un signal de remise à zéro du maître (35), le compteur de bits (22) et le compteur d'octets (23) étant alors remis à zéro,
- il existe un détecteur de flancs négatifs (33) avec une entrée et une sortie,
- l'entrée du détecteur de flancs négatifs (33) est reliée à l'interface de bus (28),
- la sortie du détecteur de flancs négatifs (33) est reliée aux entrées réinitialisées du diviseur de signaux d'horloge (20) comme du compteur auxiliaire (21),
- le détecteur de flancs négatifs (33) détecte le flanc d'impulsion négatif qui survient sur le bus (4) au début de chaque signal d'arrêt P indiquant le début d'un nouveau bit et génère en conséquence un signal de remise à zéro (34) qui permet la remise à zéro du diviseur de signaux d'horloge (20) et du compteur auxiliaire (21).

18. Système de bus selon l'une des revendications 16 ou 17, **caractérisé en ce que** dans l'élément de configuration E/S (27) se trouvent un certain nombre d'interrupteurs commutant en même temps à l'aide desquels il est possible de câbler le BT correspondant de façon que celui-ci soit aménagé en BT maître (1) ou en BT esclave (5), les éléments respectivement superflus étant alors mis hors circuit, et des entrées et sorties de divers éléments étant interconnectées de la manière correspondant au BT maître (1) ou au BT esclave (5) respectivement.

19. Système de bus selon l'une des revendications 1 à 18, **caractérisé en ce que** tous les BT connectés au bus (4) sauf un présentent dans un premier temps en amont de leur entrée un redresseur double alternance (17), excluant ainsi toute inversion de polarité lors de l'installation du système de bus.

20. Système de bus selon l'une des revendications 1 à 19, **caractérisé en ce qu'**une pluralité des sous-ensembles compris dans un BT est intégrée sur une puce unique.
